# EUROPÄISCHE PATENTSCHRIFT

(11) **EP 0 689 714 B1**
(45) Veröffentlichungstag und Bekanntmachung des Hinweises auf die Patenterteilung: **11.06.1997**
(21) Anmeldenummer: 94910324.6
(22) Anmeldetag: 04.03.1994
(51) Int. Cl.: G21C 3/322

(54) **DRUCKWASSERREAKTOR MIT DURCH INDIVIDUELL IN DEN EINZELNEN BRENNSTABBÜNDELN ANGEPASSTEN DRUCK ERZIELTER KÜHLMITTELDRUCKVERTEILUNG**
PRESSURIZED-WATER REACTOR IN WHICH THE COOLANT-DISTRIBUTION PRESSURE IS INDIVIDUALLY MATCHED TO EACH BUNDLE OF FUEL RODS
REACTEUR A EAU SOUS PRESSION DANS LEQUEL LA PRESSION DE DISTRIBUTION DE CALOPORTEUR EST ADAPTEE AUX FAISCEAUX INDIVIDUELS DE CRAYONS COMBUSTIBLES

(30) Priorität: 16.03.1993 DE 4308364
(43) Veröffentlichungstag der Anmeldung: 03.01.1996
(73) Patentinhaber: SIEMENS AKTIENGESELLSCHAFT, 80333 München (DE)
(72) Erfinder: REN, Mingmin, D-91058 Erlangen (DE); STABEL-WEINHEIMER, Jürgen, D-91058 Erlangen (DE)
(86) Internationale Anmeldenummer: DE9400256
(87) Internationale Veröffentlichungsnummer: WO9422146

(56) Entgegenhaltungen:
- EP-A- 0 027 984
- EP-A- 0 059 661
- EP-A- 0 246 962
- EP-A- 0 388 091
- DE-A- 2 245 006
- DE-A- 3 150 477

## Beschreibung

Die Erfindung betrifft einen Druckwasserreaktor mit den im Oberbegriff des Anpruchs 1 angegebenen Merkmalen.

Brennelemente von Druckwasserreaktoren enthalten ein Bündel von Brennstäben, die um Steuerstabflihrungsrohre herum angeordnet sind, wobei dieses Brennstabbündel im Kopf des Brennelements von einer Deckplatte abgedeckt ist. Im Inneren eines Druckbehälters stehen eine Vielzahl derartiger Brennelemente nebeneinander auf einem Rost am Boden des Druckbehälters und sind mit ihren Kopfteilen an den Maschen einer Gitterplatte abgestützt. Oberhalb der Gitterplatte ist im Inneren des Druckbehälters ein Sammelraum gebildet, in den Aufbauten auf der Oberseite der Gitterplatte ragen. Dieser Sammelraum enthält einen seitlichen Auslaß, zum Beispiel einen oder mehrere Auslaßstutzen für einen Kühlmittelstrom. Dieser Kühlmittel strom ist durch entsprechende Mittel von einem Einlaß im Druckbehälter zum Rost am Boden des Druckbehälters geführt, wird dort auf die einzelnen Brennelemente verteilt, strömt dann längs der Brennstäbe und tritt durch Durchtrittsöffnungen in den Deckplatten der Brennelemente aus, um durch die Maschen der Gitterplatte hindurch in den Sammelraum einzutreten.

Dabei kann der Rost am Boden des Druckbehälters bereits Drosselplatten oder Einsätze tragen, um den Kühlmittelstrom gleichmäßig über den gesamten Querschnitt des Druckbehälters zu verteilen. Die Zwischenräume zwischen den Brennstäben und Führungsrohren eines Brennelements sind miteinander und mit den Zwischenräumen benachbarter Brennelemente verbunden, so daß im Druckbehälter quer zu den Brennelementen gerichtete Kühlmittel strömungen auftreten können. Dies kann erwünscht sein, um zwischen heißeren und kühleren Bereichen des Kühlmittels eine Durchmischung zu erreichen, wozu Abstandhalter mit entsprechenden Ablenkeinrichtungen an verschiedenen axialen Ebenen des Brennelements vorgesehen sein können. Derartige Abstandhalter werden ohnehin benötigt, um den seitlichen Abstand der Brennstäbe zu fixieren, es können aber außer diesen die Brennstäbe abstützenden Abstandhaltern auch zusätzlich eigene Gitterstrukturen zur Halterung weiterer Mischeinrichtungen an den Brennelementen vorgesehen sein. Die Aufbauten, die von der Oberseite der Gitterplatte in den Dom des Druckbehälters (also den Sammelraum für das an den Brennstäben erhitzte Kühlmittel) ragen, sind zum Beispiel nötig, um die Gitterplatte mechanisch abzustützen und die in die Steuerstabführungsrohre einführbaren Steuerstäbe aufzunehmen. Die Teilströme des Kühlmittels, in die das Kühlmittel am unteren Rost aufgeteilt wird und die nach dem Durchströmen der einzelnen Brennelemente durch die einzelnen Maschen der Gitterplatte austreten, haben daher auf ihrem Weg zum Auslaß einen individuellen Strömungswiderstand zu überwinden, der durch die Länge des jeweiligen Strömungsweges und die in diesem Weg stehenden Hindernisse bestimmt ist. Daher tritt im Kühlmittel beim Durchtritt durch die Durchtrittsöffnungen der Platten ein Druck auf, der inhomogen über den Querschnitt des Druckbehälters verteilt ist. Beim Durchtritt durch die Deckplatten erleidet also das Kühlmittel einen Rückstau, der wegen der geometrischen Anordnung der Aufbauten auf der Deckplatte und des seitlichen Auslasses für jedes Brennelement anders sein kann und bereits in der axialen Zone des Druckbehälters, in der die Brennstäbe sitzen, zu Druckdifferenzen und daraus resultierenden Querströmungen führt.

Bereits diese Druckdifferenzen sind eine der Ursachen für Verbiegungen der Brennstäbe und Brennelemente. Darüber hinaus regen die Querströmungen die Brennstäbe und die Strukturelemente der Brennelemente zu Schwingungen und mechanischen Belastungen an. Insgesamt werden dadurch andere physikalische Belastungen der Brennelemente verstärkt, so daß es zu Schäden an den Brennelementen kommen kann.

Zur Vermeidung von horizontalen Druckdifferenzen und Querströmungen kann das Kühlmittel vertikal durch den Sammelraum im Dom des Druckbehälters geführt und durch entsprechende vertikale Austrittsstutzen, die die Geometrie der Aufbauten auf der Gitterplatte berücksichtigen, abgeführt werden. Dies führt jedoch zu einer komplizierteren Bauweise bzw. einer unzulässigen Bauhöhe des Druckbehälters.

Der Erfindung liegt daher die Aufgabe zugrunde, bei Reaktoren der eingangs angegebenen Art im Inneren des Reaktordruckbehälters eine inhomogene Strömungsgeschwindigkeit mit unerwünschten Querströmungen in dem axialen Bereich, in dem die Brennstäbe sitzen, durch eine individuelle Anpassung der Strömungsverhältnisse im Bereich der Brennelement-Köpfe und der diese Köpfe abstützenden Gitterplatte zu vermeiden. Diese Aufgabe wird durch eine individuelle Drosselung des Kühlmittelstroms beim Durchtritt durch die einzelnen Brennelement-Köpfe oder spätestens beim Durchtritt durch die Gitterplatte gelöst. Eine derartige individuelle Drosselung beim Durchtritt durch den Kopf des Brennelements ist durch die Merkmale des Anspruchs 1, eine entsprechende individuelle Drosselung beim Durchtritt durch die Maschen der Gitterplatte durch die Merkmale des Anspruchs 7 erreicht.

Demnach kann also im Kopf mehrerer Brennelemente (insbesondere jeweils oberhalb der Deckplatte) eine Drosselplatte befestigt sein, die eine oder mehrere Drosselöffnungen zur individuellen Anpassung des Drucks im Kühlmittel enthält, das den Kopf des jeweiligen Brennelements durchströmt. Es können aber auch mehrere der Gittermaschen, an denen die jeweiligen Brennelemente abgestützt sind, Drosselelemente mit jeweils einer oder mehreren Durchtrittsöffnungen tragen, die die individuelle Anpassung des Druckes im Kühlmittels bewirken, das den Kopf dieser Brennelemente durchströmt.

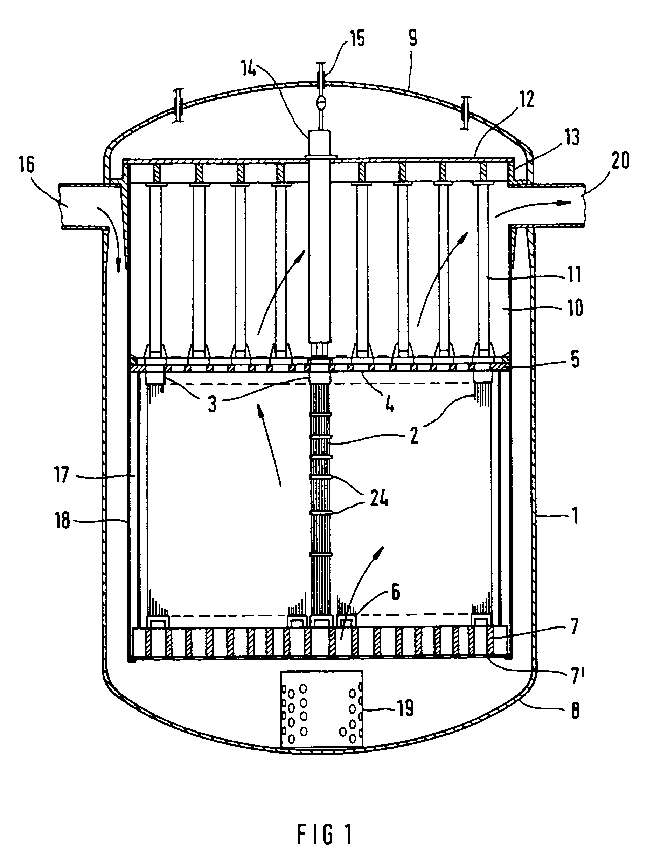

Vorteilhafte Weiterbildungen der Erfindung sind in den Unteransprüchen angegeben. Anhand von drei Ausführungsbeispielen und sechs Figuren wird die Erfindung näher erläutert. Es zeigen:
Figur 1 das Schema eines Reaktor-Druckbehälters für einen Druckwasser-Kernreaktor,
Figur 2 eine typische Verteilung der horizontalen Geschwindigkeitskomponente des Kühlmittels unterhalb der Gitterplatte eines herkömmlichen Reaktors,
Figur 3 einen Querschnitt durch eine Deckplatte und eine Drosselplatte im Kopf eines Brennelements, die durch die Verschraubung eines Steuerstab-Führungsrohres zusammengehalten werden,
Figur 4 einen Teil-Querschnitt durch eine Deckplatte und eine Drosselplatte,
Figur 5 die Seitenansicht eines Brennelement-Kopfes mit einer durch Niederhalter gehaltenen Drosselplatte, und
Figur 6 einen Teil-Querschnitt durch die Gitterplatte mit ihren Aufbauten und einem in eine Masche der Gitterplatte eingesetzten Drosselelement.
Gemäß Figur 1 ist im Inneren eines Reaktor-Druckbehälters 1 ("pressure vessel") eine Vielzahl von Brennelementen 2 angeordnet, die mit den Brennelement-Köpfen 3 an den Maschen 4 einer Gitterplatte 5 ("grid plate") abgestützt sind. Die Brennelement-Füße 6 ruhen nebeneinander auf einem unteren Rost 7 ("lower core support") mit einer Stauplatte 7 ("flow distribution plate") am Boden 8 des Druckbehälters 1. Unter dem Deckel 9 des Druckbehälters befindet sich der Sammelraum 10 ("plenum"), der von der die Brennelemente enthaltenden Zone des Druckbehälters durch die Gitterplatte 5 getrennt ist. Von der Gitterplatte aus ragen Stütz-Säulen 11 ("support column") durch den Sammelraum 10 bis zu einer Deckplatte 12 ("top plate") über einem oberen Rost 13 ("upper core support") zur Halterung der Gitterplatte 5 und der Brennelement-Köpfe. Der Übersichtlichkeit wegen ist nur über einem Brennelement eine Steuerstab-Führung 14 gezeichnet, die die Steuerstäbe aufnehmen, die zur Steuerung der Kernreaktion in Steuerstab-Führungsrohre einzelner Brennelemente eingefahren werden können. Der Deckel trägt daher Durchführungen 15, die den Antriebselementen für jeweils mehrere Steuerstäbe zugeordnet sind.

Die Brennelement-Zone ist seitlich von einer Kernumfassung 17 ("core shroud") innerhalb eines Kernbehälters ("core barrel") 18 umgeben, so daß das durch einen Einlaß 16 einströmende Kühlmittel zu einer Siebtonne 19 ("flow skirt") am Boden des Druckbehälters geleitet wird. Das Kühlmittel tritt dann von unten durch den unteren Rost 7 jeweils in den Fuß eines Brennelements ein und strömt im wesentlichen vertikal entlang der Brennstäbe zu den Durchtrittsöffnungen einer Deckplatte, die im Kopf des Brennelements das entsprechende Brennelement abdeckt. Durch den Brennelement-Kopf 3 und die Masche 4 der Gitterplatte 5 tritt das Kühlmittel dann aus dem jeweiligen Brennelement in den Sammelraum 10 ein, in dem es zu einem oder mehreren seitlichen Auslaßstutzen (Auslaß 20) abgelenkt wird.

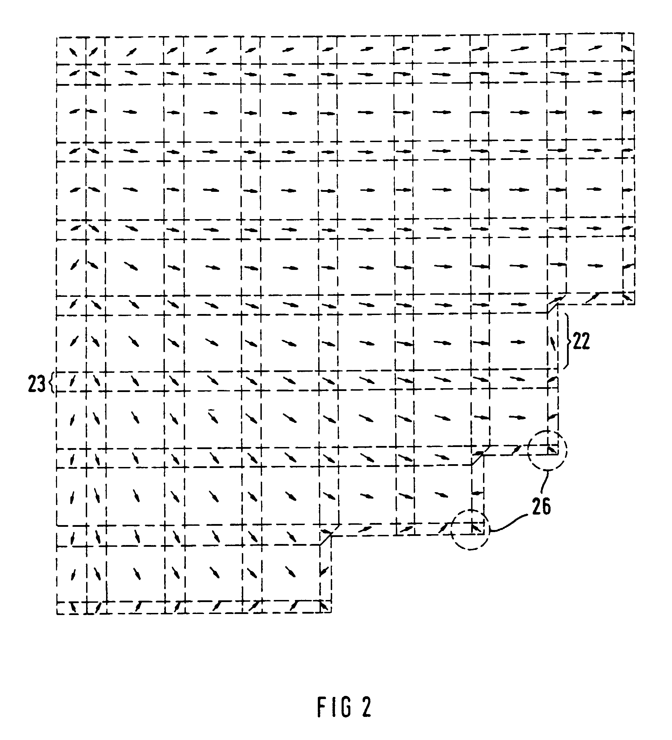

In Figur 2 sind die Horizontal-Komponenten der Kühlmittelströmung gezeigt, die innerhalb eines Quadranten der Kernumfassung auftreten. Die Brennelemente sind dabei in Reihen 22 angeordnet, deren Fluchtlinien Figur 2 zeigt. Zwischen den einzelnen Brennelement-Reihen werden dabei Spalten 23 gebildet, wobei das Kühlmittel weitgehend ungehindert durch die Spalten 23 hindurch von einer Brennelement-Reihe in die andere übertreten kann. Diese Querströmungen werden von Druckunterschieden unterhalb der Gitterplatte erzeugt, wobei diese Druckunterschiede durch den Rückstau entstehen, den das Kühlmittel durch die Strömungshindernisse erleidet, die sich ihm im Sammelraum nach dem Durchtritt durch die Gitterplatte und auf dem Weg zum Auslaß entgegenstellen. Diese Druckunterschiede und Strömungen erzeugen vor allem im oberen Bereich der Brennelemente Verbiegungen und horizontale Vibrationen, die zu Schäden an den Brennstäben und Brennelementen führen können, die ohnehin aufgrund der hohen Temperaturen, Temperaturbelastungen und strahlungsbedingten Änderungen im Laufe des Reaktorbetriebes verbogen werden.

Damit trotz dieser Verbiegungen stets ein für den Kühlmittelfluß ausreichender Abstand zwischen einzelnen Brennstäben eines Brennelements sichergestellt ist, sind diese Brennstäbe an verschiedenen axialen Positionen durch die Maschen von Abstandhaltern 24 (Figur 1) geführt und mechanisch abgestützt, wobei es bereits bekannt ist (EP-A-0 246 962), den axialen Abstand dieser Abstandgitter im oberen Bereich des Brennelements enger zu wählen. Jedoch können sogar an den Abstandhaltern Brüche von Schweißnähten oder andere mechanische Schäden auftreten. Figur 2 zeigt einige Positionen 26, an denen zum Beispiel durch starke Änderungen der Strömung und der Strömungsrichtung Turbulenzen und besondere mechanische Belastungen auftreten.

Während eine kontrollierte Querströmung zur Steigerung der Durchmischung und Kühlwirkung an sich wünschenswert ist und durch Leitflächen an den Abstandhalterstegen bewußt erzeugt werden kann, sind derartige inhomogene Strömungsverhältnisse, wie sie Figur 2 zeigt, auch im Hinblick auf eine gleichmäßige Kühlung des Reaktorkerns unerwünscht.

Während bei Siedewasserreaktoren der Kühlmittelstrom, der bereits an einer unteren Gitterplatte bzw. dem unteren Rost 7 einigermaßen gleichmäßig über die verschiedenen Bereiche des Kernquerschnitts verteilt wird, in den einzelnen Brennelementen individuell geführt wird (die Brennelement-Füße enthalten trichterförmige, seitlich geschlossene Übergangsstücke und das Brennstabbündel ist von einem Brennelement-Kasten ("water canal") seitlich umgeben), bestehen die Füße von üblichen Druckwasser-Brennelementen nur aus einem seitlich offenen Rahmen und die Brennelemente sind seitlich nicht von einem Kanal umgeben. Die Erfindung sieht daher vor, bei den Brennelementen eines Druckwasserreaktors durch entsprechende Drosselung des Kühlmittel flusses beim Eintritt in den Sammelraum 10 gleichmäßige Druckverhältnisse zu erzwingen, so daß die Ursache für die erwähnten Querströmungen unterhalb der Gitterplatte wegfallen.

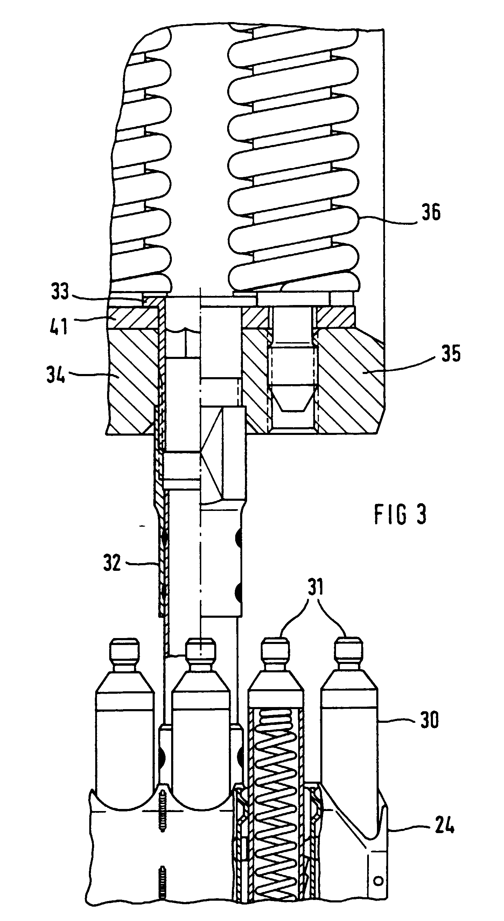

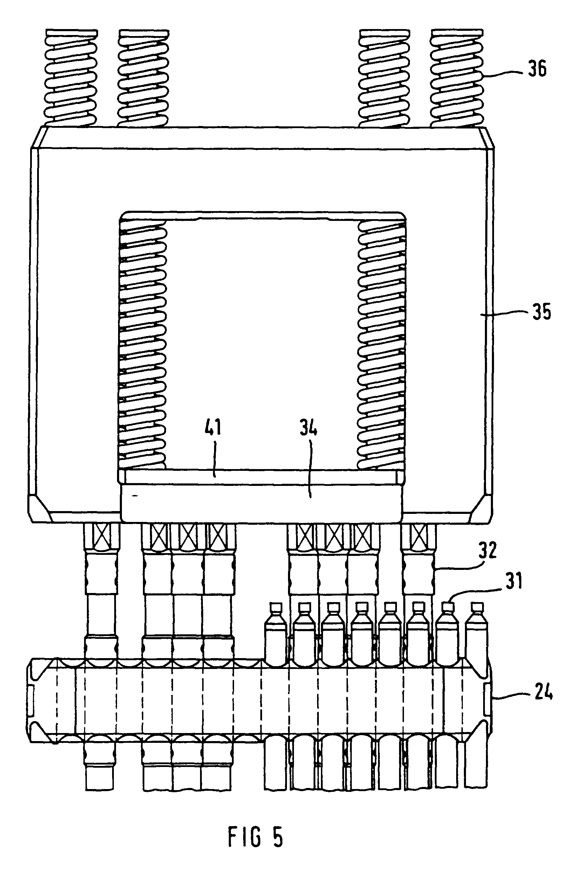

In Figur 3 ist ein Querschnitt durch den Kopf-Bereich eines Brennelements gezeigt. Die oberen Verschlußkappen 30 der einzelnen Brennstäbe 31, in denen durch Druckfedern ein Ausgleichsraum für die durch die nuklearen Vorgänge erzeugten gasförmigen Spaltprodukte geschaffen ist, sind in den Maschen eines Abstandhalters 24 gehalten. Die Abstandhalter selbst werden von Steuerstab-Führungsrohren 32 getragen, die durch eine aufgeschraubte Mutter 33 an einer Deckplatte 34 befestigt sind. Eine ähnliche Befestigung ist auch zwischen den Führungsrohren und den Brennelement-Füßen 6 vorgesehen, so daß die von einem Rahmen 35 des Brennelement-Kopfes getragene Deckplatte, die Führungsrohre mit den Abstandhaltern und das Fußteil ein tragendes Skelett für die Brennstäbe bilden. Wie auch Figur 5 zeigt, ist der Rahmen 35 des Brennelement-Kopfes mit der zugehörigen Deckplatte 34 durch Druckfedern 36 an der Gitterplatte 5 abgestützt.

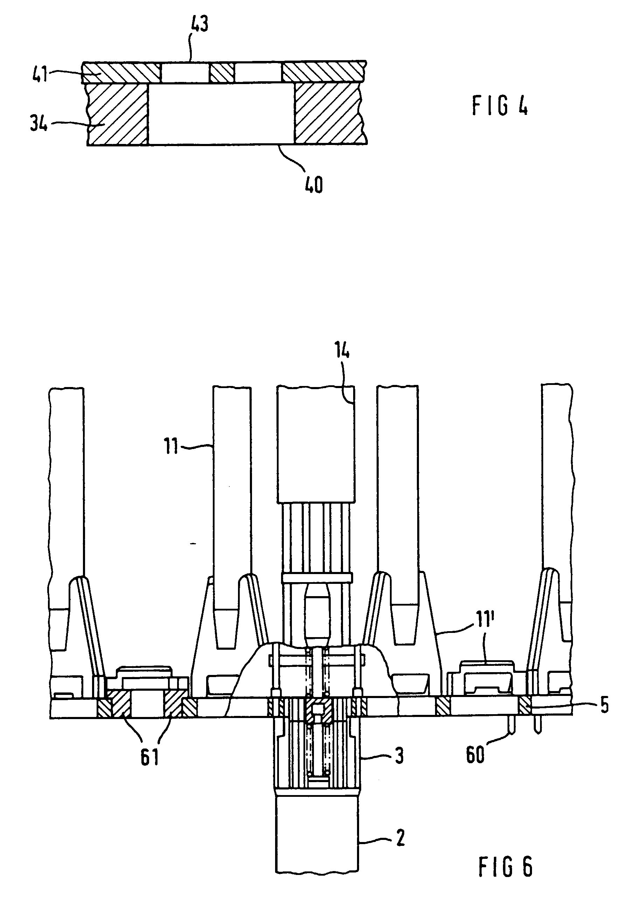

Figur 4 zeigt, daß die Deckplatte 34 Durchtrittsöffnungen 40 aufweist, die vorteilhaft so angeordnet sind, daß sie über den Zwischenräumen liegen, die zwischen den einzelnen Brennstäben 31 entstehen.

Bei den Ausführungsbeispielen der Figuren 3 und 5 ist zumindest im Kopf mehrerer Brennelemente eine Drosselplatte 41 lösbar befestigt. Diese Drosselplatte kann insbesondere auf der Deckplatte aufliegen, wobei in Figur 3 diese Drosselplatte 41 über die Mutter 33 einiger Steuerstabführungsrohre 32 mit der Deckplatte 34 verschraubt ist. Figur 5 zeigt, daß vorteilhaft die Deckplatte 34 und Drosselplatte 41 über gemeinsame Niederhalter, zum Beispiel die Federn 36, im Kopf des Brennelements gehalten sind.

Die Drosselplatte enthält gemäß Figur 4 Drosselöffnungen 43, die vorteilhaft insgesamt eine kleinere Querschnittsfläche besitzen als die Durchtrittsöffnungen 40 der Deckplatte 34 und mit dem größten Teil ihrer Querschnittsfläche über diesen Durchtrittsöffnungen 40 liegen.

Die Anordnung der einzelnen Drosselplatten und die Dimensionierung ihrer Durchtrittsöffnungen sind individuell so an die Position des jeweiligen Brennelements an der Gitterplatte angepaßt, daß beim Durchtritt des Kühlmittels durch die Brennelement-Köpfe aller Brennelemente zum Beispiel überall ein gleichmäßiger Rückstau entsteht, also keine horizontalen Druckänderungen auftreten. Es kann dabei aber durch entsprechende Gestaltung der Drosselplatten auch vorgesehen sein, zur Erhöhung einer Durchmischung des Kühlmittels ein gewisses gleichmäßiges Muster schwacher Querströmungen aufrechtzuerhalten.

In Figur 6 ist gezeigt, daß die Gitterplatte 5 an ihrer Unterseite Zentrierstifte 60 ("fuel assembly alinement pin") tragen kann, die in entsprechende Bohrungen in den Kopfteilen 3 der Brennelemente eingreifen, um die Brennelement-Köpfe an den jeweiligen Maschen der Gitterplatte 5 zu positionieren. Die Oberseite der Gitterplatte 5 trägt die Steuerstabführungen 14, die Stützsäulen 11 sowie Haltestrukturen 11' für die Brennelement-Köpfe. Die Stege der Gitterplatte 5 bilden ein- zelne Maschen, wobei zumindest in mehrere dieser Maschen - Drosselelemente 61 eingesetzt sind. Diese Drosselelemente können bei einem Austausch verbrauchter Brennelemente zusammen mit neuen Brennelementen eingesetzt werden, um den Druck im Kühlmittel, das aus dem Kopf der an diesen Gittermaschen abgestützten neuen Brennelemente austritt, an den Druck anzugleichen, der bei dem alten Brennelement geherrscht hat. Werden bei einem derartigen Brennelementwechsel Brennelemente, die noch nicht vollkommen abgebrannt sind, an einen anderen Platz im Reaktorkern versetzt, so können die Drosselelemente, die vorteilhaft als Einsätze für die Gittermaschen ausgebildet sind, wieder an den alten Platz gesetzt werden.

Die erfindungsgemäßen Drosselplatten oder Drosselelemente beeinflussen also den im Kühlmittel unterhalb der Gitterplatte auftretenden Rückstau so, daß unterhalb dieser Gitterplatte praktisch keine horizontalen Druckdifferenzen auftreten oder zumindest diese Druckdifferenzen zu einer gewünschten Verteilung des Kühlmittels beim Eintritt in den Sammelraum führen. Darüber hinaus können sie zur Stabilisierung der angestrebten Strömung beitragen, wodurch auch die thermodynamischen und hydrodynamischen Verhältnisse im Reaktorkern leichter berechenbar und beherrschbar werden.

## Patentansprüche

1. Druckwasserreaktor mit einer Vielzahl von Brennelementen (2), die nebeneinander im Inneren eines Druckbehälters (1) auf einem Rost (7) am Boden (8) des Druckbehälters stehen und ferner jeweils ein um Steuerstabführungsrohre (32) herum angeordnetes Bündel von Brennstäben (30) enthalten und über einen eine das Bündel abdeckenden Deckplatte (34) tragenden Kopf (3) an Maschen (4) einer Gitterplatte (5) abgestützt sind, wobei oberhalb der Gitterplatte im Inneren des Druckbehälters (1) ein Sammelraum (10) gebildet ist, in den Aufbauten (11, 14) auf der Oberseite der Gitterplatte (5) ragen und der einen seitlichen Auslaß (20) trägt, und wobei der Druckbehälter (1) Mittel (17, 18, 19) aufweist, die einen Kühlmittelstrom von einem Einlaß (16) in den Druckbehälter durch den Rost (7) hindurch lenken, auf die einzelnen Brennelemente verteilen und längs der Brennstäbe und durch Durchtrittsöffnungen (40) in den Deckplatten der Brennelemente und durch Maschen (4) der Gitterplatte hindurch in den Sammelraum (10) leiten,
**dadurch gekennzeichnet**, daß im Kopf (3) mehrerer Brennelemente eine--Drosselplatte (41) mit Drosselöffnungen (42) zur individuellen Anpassung des Drucks im den Kopf des jeweiligen Brennelements durchströmenden Kühlmittel befestigt ist:

2. Reaktor nach Anspruch 1,
**dadurch gekennzeichnet**, daß die Drosselöffnungen (42) der Drosselplatte (41) einen kleineren Querschnitt besitzen als die Durchtrittsöffnungen (40) der Deckplatte (34) und mit dem größten Teil ihrer Querschnittsfläche über den Durchtrittsöffnungen der Deckplatte liegen.

3. Reaktor nach Anspruch 1 oder 2,
**dadurch gekennzeichnet**, daß die Drosselplatte lösbar im Brennelement-Kopf befestigt ist.

4. Reaktor nach einem der Ansprüche 1 bis 3,
**dadurch gekennzeichnet**, daß die Drosselplatte (41) und die Deckplatte (34) gemeinsam mit einem Oberende von Steuerstabführungsrohren verschraubt sind.

5. Reaktor nach einem der Ansprüche 1 bis 3,
**dadurch gekennzeichnet**, daß die Deckplatte und die Drosselplatte über gemeinsame Niederhalter (36) im Kopf des Brennelements gehalten sind.

6. Reaktor nach einem der Ansprüche 1 bis 5,
**dadurch gekennzeichnet**, daß die Drosselplatte (41) jeweils oberhalb der Deckplatte (34) angeordnet ist.

7. Druckwasserreaktor mit einer Vielzahl von Brennelementen (2), die nebeneinander im Inneren eines Druckbehälters (1) auf einem Rost (7) am Boden (8) des Druckbehälters stehen, jeweils ein Bündel von Brennstäben (2) enthalten und über einen Kopf an den Maschen (4) einer Gitterplatte (5) abgestützt sind, wobei oberhalb der Gitterplatte (5) im Inneren des Druckbehälters ein Sammelraum (10) gebildet ist, in den Aufbauten (11, 14) auf der Oberseite der Gitterplatte ragen und der einen seitlichen Auslaß (20) für Kühlmittel trägt, und wobei der Druckbehälter (1) Mittel aufweist, die einen Kühlmittelstrom von einem Einlaß (16) in den Druckbehälter lenken, durch den Rost (7) hindurch auf die einzelnen Brennelemente (3) verteilen und längs der Brennstäbe und durch die Köpfe der Brennelemente und die Maschen der Gitterplatte hindurch in den Sammelraum (10) leiten,
**dadurch gekennzeichnet**, daß mehrere Gittermaschen (4) Drosselelemente (61) mit jeweils einer oder mehreren Durchtrittsöffnungen zur individuellen Anpassung des Drucks im aus dem Kopf der an diesen Gittermaschen abgestützten Brennelemente austretenden Kühlmittels tragen.

8. Reaktor nach Anspruch 7,
**gekennzeichnet** durch in die Gittermaschen eingesetzte Drosseleinsätze (61).

## Claims

1. Pressurized-water reactor having a multiplicity of fuel elements (2) which are disposed adjacently inside a pressure vessel (1) on a core support (7) at the bottom (8) of the pressure vessel and, furthermore, each contain a bundle of fuel rods (30), arranged around control-rod guide tubes (32), and are supported on apertures (4) of a grid plate (5) by means of a top (3) bearing a top plate (34) covering the bundle, a plenum (10) being formed above the grid plate inside the pressure vessel (1), into which plenum attachments (11, 14) protrude on the upper side of the grid plate (5), and which plenum bears a lateral outlet (20), and the pressure vessel (1) having means (17, 18, 19) which deflect a coolant flow from an inlet (16) into the pressure vessel through the core support (7), distribute it over the individual fuel elements and guide it along the fuel rods and through passage openings (40) in the top plates of the fuel elements and through apertures (4) in the grid plate into the plenum (10), characterized in that a throttle plate (41) is attached in the top (3) of a plurality of fuel elements, having throttle openings (42) for the individual adaptation of the pressure in the coolant flowing through the top of the respective fuel element.

2. Reactor according to Claim 1, characterized in that the throttle openings (42) in the throttle plate (41) have a smaller cross-section than the passage openings (40) in the top plate (34) and lie with the greatest part of their cross-sectional area above the passage openings in the top plate.

3. Reactor according to Claim 1 or 2, characterized in that the throttle plate is attached releasably in the top of the fuel element.

4. Reactor according to any of Claims 1 to 3, characterized in that the throttle plate (41) and the top plate (34) are bolted together to an upper end of control-rod guide tubes.

5. Reactor according to any of Claims 1 to 3, characterized in that the top plate and the throttle plate are held in the top of the fuel element by means of common holding-down devices (36).

6. Reactor according to any of Claims 1 to 5, characterized in that the throttle plate (41) is arranged in each case above the top plate (34).

7. Pressurized-water reactor having a multiplicity of fuel elements (2) which are disposed adjacently inside a pressure vessel (1) on a core support (7) at the bottom (8) of the pressure vessel, each contain a bundle of fuel rods (2), and are supported by means of a top on the apertures (4) of a grid plate (5), a plenum (10) being formed above the grid plate (5) inside the pressure vessel, into which plenum attachments (11, 14) protrude on the upper side of the grid plate, and which plenum bears a lateral outlet (20) for coolant, and the pressure vessel (1) having means which deflect a coolant flow from an inlet (16) into the pressure vessel, distribute it through the core support (7) over the individual fuel elements (3) and guide it along the fuel rods and through the tops of the fuel elements and the apertures in the grid plate into the plenum (10), characterized in that a plurality of grid apertures (4) bear throttle elements (61) each having one or more passage openings for the individual adaptation of the pressure in the coolant emerging from the top of the fuel elements supported on said grid apertures.

8. Reactor according to Claim 7, characterized by throttle inserts (61) inserted in the grid apertures.

## Revendications

1. Réacteur à eau sous pression, comportant une pluralité d'assemblages combustibles (2), qui sont disposés les uns à côté des autres à l'intérieur d'une cuve (1) sous pression sur une grille (7) au fond (8) de la cuve sous pression et qui en outre comporte chacun un faisceau de crayons (30) combustibles disposé autour de tubes-guides (32) de barre de commande, et qui s'appuient sur des mailles (4) d'une plaque (5) de grille par une tête (3) portant une plaque (34) de recouvrement recouvrant le faisceau, dans lequel il est formé, au-dessus de la plaque de grille à l'intérieur de la cuve (1) sous pression, une chambre (10) collectrice, dans laquelle des superstructures (11, 14) font saillies du côté supérieur de la plaque (5) de grille et qui comporte une sortie (20) latérale, et dans lequel la cuve (1) sous pression comporte des moyens (17, 18, 19) qui dévient un courant de fluide de refroidissement arrivant par une entrée (16) dans la cuve sous pression pour le faire passer à travers la grille (7), le répartissent sur les assemblage combustibles et le font passer le long des crayons combustibles et par des ouvertures (40) de traversée ménagées dans la plaque de recouvrement des assemblages combustibles et par des mailles (4) de la plaque de grille jusque dans la chambre (10) collectrice, caractérisé en ce que, il est fixé dans la tête (3) de plusieurs assemblages combustibles, une plaque (41) d'étranglement comportant des ouvertures (42) d'étranglement pour l'adaptation individuelle de la pression dans la tête du fluide de refroidissement s'écoulant dans chacun des assemblages combustibles.

2. Réacteur suivant la revendication 1, caractérisé en ce que les ouvertures (42) d'étranglement de la plaque (41) d'étranglement ont une section transversale plus petite que celle des ouvertures (40) de traversée de la plaque (34) de recouvrement et reposent par leur partie la plus grande de leur surface transversale sur les ouvertures de traversée de la plaque de recouvrement.

3. Réacteur suivant la revendication 1 ou 2, caractérisé en ce que la plaque d'étranglement est fixée de manière amovible dans la tête d'assemblage combustible.

4. Réacteur suivant l'une des revendications 1 à 3, caractérisé en ce que la plaque (41) d'étranglement et la plaque (34) de recouvrement sont vissées en commun à une extrémité supérieure de tube-guide de barres de commande.

5. Réacteur suivant l'une des revendications 1 à 3, caractérisé en ce que la plaque de recouvrement et la plaque d'étranglement sont maintenues dans la tête de l'assemblage combustible par l'intermédiaire d'un serre-flanc commun.

6. Réacteur suivant l'une des revendications 1 à 5, caractérisé en ce que la plaque (41) d'étranglement est disposée au-dessus de la plaque (34) de recouvrement.

7. Réacteur à eau sous pression comportant une pluralité d'assemblages combustibles (2), qui se trouvent les uns à côté des autres à l'intérieur d'une cuve (1) sous pression sur une grille (7) au fond (8) de la cuve sous pression, qui comporte chacun un faisceau de crayons (2) combustibles et qui s'appuient chacun par une tête sur la maille (4) d'une plaque (5) de grille, dans lequel il est formé au-dessus de la plaque (5) de grille à l'intérieur de la cuve sous pression une chambre (10) collectrice, dans laquelle des superstructures (11, 14) font saillies du côté supérieur de la plaque de grille et qui comportent une sortie (20) latérale pour du fluide de refroidissement, et dans lequel la cuve (1) sous pression comporte des moyens qui dévient un courant de fluide arrivant d'une entrée (16) dans la cuve sous pression, le répartissent par la grille (7) dans les assemblages (3) combustibles individuels et le conduisent le long des crayons combustibles et par la tête de l'assemblage combustible et les mailles de la plaque de grille jusque dans la chambre (10) collectrice, caractérisé en ce que plusieurs mailles (4) de grille portent des éléments (61) d'étranglement comportant chacun une ou plusieurs ouvertures de traversée pour l'adaptation individuelle de la pression dans le fluide de refroidissement sortant de la tête des assemblages combustibles supportés sur ces mailles de grille.

8. Réacteur suivant la revendication 7, caractérisé par des inserts (61) d'étranglement insérés dans des mailles de grille.
